# EUROPEAN PATENT APPLICATION

(11) **EP 2 153 980 A1**
(43) Date of publication of application: **17.02.2010**
(21) Application number: 08751929.4
(22) Date of filing: 22.04.2008
(51) Int. Cl.: B29D 30/18

(54) **DEVICE AND METHOD FOR PRODUCING TIRE**

(30) Priority: 21.05.2007 JP 2007134092
(71) Applicant: Bridgestone Corporation, Tokyo 104-8340 (JP)
(72) Inventor: TAKASUGA, Yutaka, Kodaira-shi Tokyo 187-8531 (JP)
(74) Representative: Whalley, Kevin
(86) International application number: PCT/JP2008/057744
(87) International publication number: WO 2008/142939

(57) **Abstract**

In forming a green tire by arranging a plurality of carcass cords on a support member and disposing bead cores, the carcass cords are precisely and accurately disposed at predetermined positions. A plurality of carcass cords (C) are arranged over the entire circumference of a core (21), and the ends thereof are attached to the end holding means (30) so that the ends are held at positions distant from each other axially outward of the core (21) in a stretched state between the core (21) and themselves. Bead cores (60) are moved from the outside of the carcass cords (C) toward bead molding portions (24) of the core (21), are brought into contact with the carcass cords (C) held at the ends, and are pressed against the core (21). This pressing force presses the carcass cords (C)in the traveling direction of the bead cores (60), displaces them toward the core (21) in a stretched state, sequentially disposes the carcass cords (C) on the side surfaces of the core (21), and disposes the bead cores (60) on the bead molding portions (24) with the carcass cords (C) therebetween.

## Description

### Technical Field

The present invention relates to an apparatus and a method for producing various tires, such as pneumatic radial tires, and, more specifically, it relates to an apparatus and a method for producing tires by forming a green tire (raw tire) by disposing a plurality of carcass cords (ply cords), constituting a carcass ply, on a support member, such as a rigid core or a molding drum.

### Background Art

In general, pneumatic tires are formed of a plurality of members including a carcass ply and bead cores. These various tire components formed of unvulcanized rubber are assembled into a green tire, which is subjected to vulcanization molding to be finished as a product tire having a predetermined shape. Conventionally, in a process of forming such a green tire, a molding method using a cylindrical molding drum is widely employed. In this method, first, a tire component, such as a carcass ply, is sequentially wrapped around the outer surface of a rotating molding drum so as to be formed into a substantially cylindrical shape, substantially ring-shaped bead cores are fitted to both ends thereof, and the ends of the carcass ply etc., are folded back so as to wrap the bead cores. Next, a bladder is inflated inside thereof to swell (expand) the central portion. A belt and a tread are disposed on the outer circumference thereof, and further, other tire components are assembled to form a green tire having a predetermined shape.

In this conventional molding method, a tire component, such as a carcass ply, is formed by wrapping a sheet-like member, which is formed in advance by coating a plurality of cords arranged parallel to one another with unvulcanized rubber and cutting it into a predetermined shape, around the molding drum so as to be formed into a cylindrical shape. Therefore, green tires formed in this method have a seam (joint portion), along which the ends are joined, in the carcass ply formed in a cylindrical shape, and a step portion or the like in the vicinity thereof may degrade the uniformity of product tires and the balance in the circumferential direction of the tires, which affect various performances of the tires. At the same time, because the shape of green tires is largely changed during molding in this method, it is difficult to stabilize the above-mentioned uniformity and balance. Thus, the performance and quality of product tires may be degraded.

In addition, in this conventional method, tire components, such as a carcass ply (ply sheet) and a rubber sheet, need to be prepared in advance by cutting them into predetermined shapes. Thus, a large facility, considerable man-hour, etc., are required in each of the processes of producing and preparing these members. Thus, although this method is suitable for large-lot production, it is not suitable for small-lot single-line production, resulting in a problem in that it is impossible to flexibly cope with multi-variety small-volume production these days.

To overcome the above-described problems, conventionally, a method for producing tires using a support member, such as a rigid core (inner mold) having an outer shape conforming to the inner shape of product tires has been proposed. As an apparatus for that, a tire producing apparatus for forming a green tire has been proposed, in which a carcass ply is formed by disposing a carcass cord, formed by coating at least one cord with unvulcanized rubber, on the outer surface of the core and other tire components, such as bead cores, are assembled thereto (see Patent Document 1).

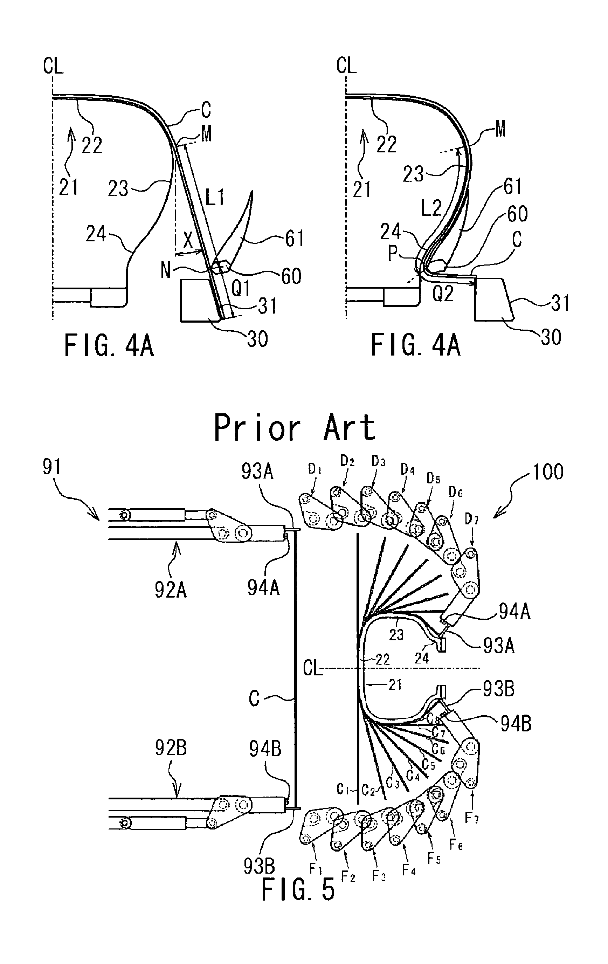

FIG. 5 is a schematic view showing an operation in which a conventional tire producing apparatus 100 disposes one carcass cord C on the outer surface of a core 21, mainly showing one side of a cross section of a relevant part of the apparatus in the width direction of the core 21. Furthermore, with respect to a cord-arranging device 91 of the tire producing apparatus 100, which disposes the carcass cord C, only the tips of a pair of manipulators 92A and 92B located on the core 21 side are shown. Moreover, in the figure, the operation of disposing the carcass cord C on the core 21 is shown by the movements of the carcass cord C and parts of the cord-arranging device 91.

The conventional tire producing apparatus 100 includes, as shown in FIG. 5, the substantially ring-shaped core 21 that is rotatable about an axis line, the cord-arranging device 91 that is disposed on one side (in the figure, left) in the radial direction of the core 21, and a rotary driving means (not shown) that rotates the core 21 about the axis line and can adjust the rotation angle thereof.

The cord-arranging device 91 includes the pair of manipulators 92A and 92B disposed substantially symmetrical with respect to an equatorial plane CL of the core 21, finger chucks 93A and 93B for holding the carcass cord C, attached to the ends of the manipulators 92A and 92B, pressing members 94A and 94B, and the like. This cord-arranging device 91 moves the finger chucks 93A and 93B holding the carcass cord C synchronously in the radial and width directions of the core 21 with the manipulators 92A and 92B, respectively (D1 to D7 and F1 to F7 in the figure) and disposes the carcass cord C, in a longitudinally stretched state, on the outer surface of the core 21 (the outer surface of the tire component already disposed on the core 21), on a one-by-one basis.

When a green tire is to be formed with the tire producing apparatus 100, first, the cord-arranging device 91 holds the carcass cord C having been cut into a predetermined length and having a uniform length in a longitudinally stretched state, brings the carcass cord C in this state into contact with the outer surface of the core 21, and attaches it to a tire crown molding portion (radially outer surface) 22 of the core 21 (C1 in the figure). Then, the carcass cord C is attached sequentially from the radially outside to the inside of the core 21 (in the figure, from the left to the right), from tire-side molding portions (side surfaces) 23 to bead molding portions (radially inside surfaces) 24 (C2 to C8 in the figure), and is disposed substantially along the meridian of the core 21. Next, the ends of the carcass cord C are pressed against the bead molding portions 24 of the core 21 with the pressing members 94A and 94B and are fixed thereto by pressing.

Next, the core 21 is rotated by a predetermined angle corresponding to the interval at which the carcass cords C are disposed (attachment pitch). Then, the next carcass cord C is disposed on the outer surface of the core 21 in the same manner as above. Thereafter, these operations are repeated in the circumferential direction of the core 21 until the core 21 makes one rotation, thereby arranging a plurality of carcass cords C on the entire outer surface of the core 21. The tire producing apparatus 100, after forming one or a plurality of carcass ply layers by arranging a plurality of carcass cords C, forms a green tire into a predetermined shape by attaching other tire components, such as bead cores. Thereafter, the green tire is inserted into a vulcanization mold (outer mold) together with the core 21 and is subjected to vulcanization molding. Thus, a product tire having a predetermined shape is produced.

Accordingly, with this conventional tire producing apparatus 100, no joint portion is formed in the carcass ply and a green tire is formed into a shape close to its final molded shape (product tire shape) from the beginning without being largely deformed during molding. Therefore, it is possible to prevent degradation in the above-described uniformity of product tires and the balance in the circumferential direction of the tires, and to improve the quality of the product tires. Furthermore, because there is no need to prepare the carcass ply in advance by forming it in a predetermined shape, the flexibility in design and production of tires increases. Thus, it is possible to flexibly cope with multi-variety small-volume production and small-lot single-line production.

However, in this conventional tire producing apparatus 100, the ends of the carcass cords C are fixed by being pressed against the bead molding portions 24 of the core 21. Therefore, it is difficult to form the structure in which the carcass cords C (carcass ply) are engaged with the bead cores of bead portions into a normal fold-back structure, for example, a structure in which the ends of the carcass cords C are folded back around the bead cores from the inside to the outside of the tire and rolled toward the radially outside of the tire, a structure in which the folded ends are wrapped along the outer surfaces of the bead cores, or the like.

That is, in order to form the thus-disposed carcass cords C into a widely used conventional fold-back structure, a very difficult operation is needed in which, after the ends of all the carcass cords C are disposed so as to extend to the outside of the core 21 from portions where they are fixed to the bead molding portions 24, the ends are removed from the bead molding portions 24 and folded back around the bead cores. Such an operation is very difficult to accurately perform. Therefore, if the carcass cords C are folded back in this manner, the accuracy and precision of folding back and wrapping of the ends degrade. As a result, deviation and variation in position of the carcass cords C or disturbance and non-uniformity in cord arrangement tend to occur. Furthermore, the position of carcass cords C on the other portions of the core 21 may be deviated and the arrangement thereof may be disturbed when folded back. Thus, the quality of tires may be degraded due to degradation in the above-described uniformity and balance.

On the other hand, to perform such a folding-back operation, a space for disposing a device therefor and for performing such an operation needs to be provided near the bead molding portions 24 of the core 21. However, from the relationship to the other devices and structures of the tire producing apparatus 100, it is difficult to provide enough space for performing the folding-back operation or disposing a device near the bead molding portions 24. As has been described, conventionally, from the standpoint of the structure of the tire producing apparatus 100, it has been difficult to accurately fold the carcass cords C back around the bead cores. Even if a fold-back structure is formed by coping with the above-described circumstances, it is necessary to increase the arrangement precision and positional accuracy while preventing the occurrence of deviation or non-uniformity in position of the carcass cords C to further improve the quality of tires.

[Patent Document 1]
Japanese Unexamined Patent Application, Publication No. 2006-142669

### Disclosure of Invention

### Problems to be Solved by the Invention

The present invention has been made in view of the above-described conventional problems, and an object thereof is, when a green tire is formed by arranging a plurality of carcass cords on a support member and disposing bead cores, to precisely and accurately arrange the carcass cords at predetermined positions and to enable the carcass cords to be precisely folded back around the bead cores to improve the quality of tires.

### Means for Solving the Problems

A first aspect of the present invention is a tire producing apparatus including a support member and a cord-arranging device for arranging carcass cords on the support member. The tire producing apparatus forms a green tire by arranging the plurality of carcass cords on the support member with the cord-arranging device and disposing bead cores on bead molding portions of the support member with the carcass cords therebetween. The tire producing apparatus includes end holding means that hold ends of the carcass cords arranged on the support member at positions distant from each other axially outward of the support member, and bead-core moving means that move the bead cores toward the bead molding portions, bring them into contact with and press them against the carcass cords held at the ends, displace the carcass cords toward the support member, and dispose the bead cores on the bead molding portions.
A second aspect of the present invention is the tire producing apparatus according to the first aspect. The bead-core moving means bring the bead cores into contact with and displace the carcass cords such that L1 < L2 stands, where L1 is a length in the longitudinal direction between a first separation position where the carcass cords before coming into contact with the bead cores are separated from the support member toward the end holding means and a position where the carcass cords first come into contact with the bead core, and L2 is a length in the longitudinal direction between the first separation position of the carcass cords and a position where the carcass cords come into contact with the bead core disposed on the bead molding portion.
A third aspect of the present invention is the tire producing apparatus according to the first or second aspect. The tire producing apparatus further includes fold-back means that fold the ends of the carcass cords disposed on the bead molding portions back around the bead cores.
A fourth aspect of the present invention is the tire producing apparatus according to the third aspect. The tire producing apparatus further includes sandwich means that sandwich the carcass cords between themselves and the bead cores from radially inward of the bead cores disposed on the bead molding portions and fix the carcass cords to the bead cores by pressing. After the sandwich means sandwich the carcass cords between themselves and the bead cores, the fold-back means fold the ends of the carcass cords back.
A fifth aspect of the present invention is a method for producing a tire in which a green tire is formed by arranging a plurality of carcass cords on a support member and disposing bead cores on bead molding portions of the support member with the carcass cords therebetween. The method includes a step of holding ends of the carcass cords arranged on the support member at positions distant from each other axially outward of the support member, a step of moving the bead cores toward the bead molding portions, and a step of bringing the moving bead cores into contact with the carcass cords held at the ends to press the bead cores thereagainst, displacing the carcass cords toward the support member and disposing the bead cores on the bead molding portions.
A sixth aspect of the present invention is the method for producing a tire according to the fifth aspect. In the step of disposing the bead cores on the bead molding portions, the bead cores are brought into contact with and displace the carcass cords such that L1 < L2 stands, where L1 is a length in the longitudinal direction between a first separation position where the carcass cords before coming into contact with the bead cores are separated from the support member and extend toward the ends being held and a position where the carcass cords first come into contact with the bead core, and L2 is a length in the longitudinal direction between the first separation position of the carcass cords and a position where the carcass cords come into contact with the bead core disposed on the bead molding portion.
A seventh aspect of the present invention is the method for producing a tire according to the fifth or sixth aspect. The method further includes a step of folding the ends of the carcass cords arranged on the bead molding portions back around the bead cores.

### Advantages

According to the present invention, in forming a green tire by arranging a plurality of carcass cords on a support member and disposing bead cores, it is possible to precisely and accurately arrange the carcass cords at predetermined positions and to fold the carcass cords back around the bead cores with high precision. Thus, the quality of tires can be improved.

### Brief Description of Drawings

[FIG. 1] FIG. 1 is a schematic view showing a relevant part of a tire producing apparatus according to this embodiment.
[FIG. 2] FIG. 2 is a schematic view showing part of an operation of forming a green tire with the tire producing apparatus according to this embodiment.
[FIG. 3] FIG. 3 is a schematic view showing part of the operation of forming the green tire with the tire producing apparatus according to this embodiment.
[FIG. 4] FIG. 4 is a schematic sectional view of a core, end holding means, etc., extracted from FIG. 1.
[FIG. 5] FIG. 5 is a schematic view showing an operation of disposing one carcass cord on an outer surface of a core with a conventional tire producing apparatus. Reference Numerals

1: tire producing apparatus, 21: core, 22: tire crown molding portion, 23: tire-side molding portion, 24: bead molding portion, 30: end holding means, 31: inclined surface, 40: bead-core moving means, 41: holding member, 42: moving mechanism, 50: bead-core fixing means, 51: carcass fold-back means, 60: bead core, 61: bead filler, 91: cord-arranging device, 92A and 92B: manipulator, 93A and 93B: finger chuck, 94A and 94B: urging member, C: carcass cord, and CL: equatorial plane.

### Best Mode for Carrying Out the Invention

An embodiment of the present invention will be described below with reference to the drawings.
A tire producing apparatus according to this embodiment is an apparatus for forming a green tire as follows: a carcass ply is formed by arranging and attaching a plurality of carcass cords onto the entirety of a support member, such as a rigid core or a molding drum, in the circumferential direction; and substantially ring-shaped bead cores are disposed on a pair of bead molding portions of the support member with the carcass cords therebetween.

Note that this support member is used in the green tire forming process and serves to support various tire components to be disposed on the outer circumferential surface and the outer surfaces, as well as to support the green tire during or after molding, to maintain a predetermined shape thereof. Examples of such a support member include a molding drum and a support ring that are capable of expansion/contraction and supporting a green tire during molding removably fitted thereto. The support member supports the tire components disposed thereon in a predetermined, e.g., swelled (shaped), shape. Alternatively, the support member may be, for example, a core having a substantially toroidal outer surface shape conforming to the inner surface shape of the green tire and the product tire to be formed. In such a case, tire components are sequentially disposed on the outer surface of the support member to form a green tire.

In this embodiment, a rigid core is used as the support member and an explanation will be given taking a tire producing apparatus similar to the above-described conventional tire producing apparatus 100 (see FIG. 5), having a core 21, a cord-arranging device 91 for arranging carcass cord C on the core 21, and the like, as an example. That is, this tire producing apparatus forms a green tire having a predetermined shape by sequentially arranging the carcass cords C on the core 21 substantially along the meridian, radially in the radial direction, using the cord-arranging device 91 to form and produce a pneumatic tire.

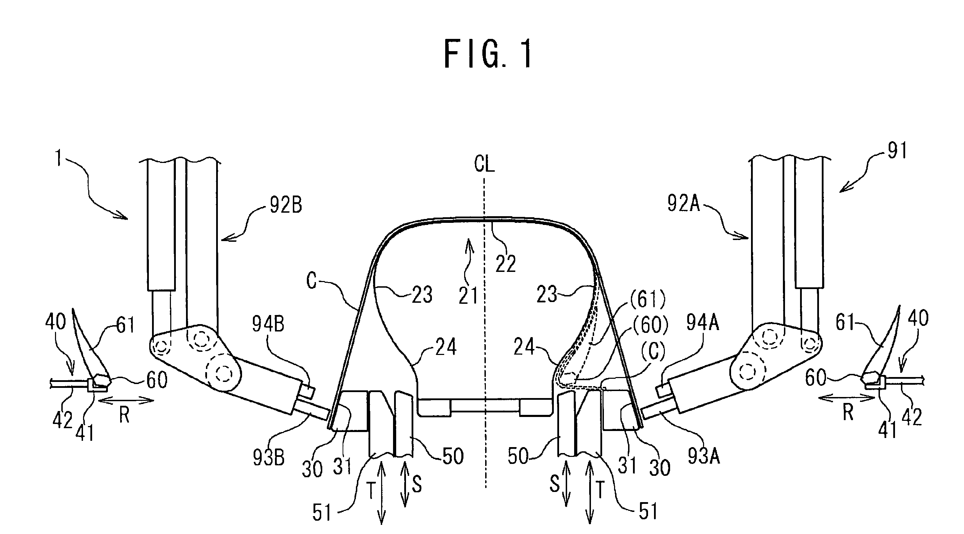

FIG. 1 is a schematic view showing a relevant part of a tire producing apparatus 1 according to this embodiment, mainly showing one side of an enlarged cross section in the width direction of the core 21.
Although, in the tire producing apparatus 1, a known device can be used as a cord-arranging device, herein, the above-described conventional cord-arranging device 91 (see FIG. 5) is used. The figure shows only the tips of manipulators 92A and 92B located on the core 21 side.

The tire producing apparatus 1 according to this embodiment includes, as shown in the figure, the substantially ring-shaped core 21 supported so as to be rotatable about the axis line, a cord-arranging device 91 disposed on one side in the radial direction of the core 21, end holding means 30 disposed on both sides of the core 21 in an axial direction (in the figure, a direction perpendicular to an equatorial plane CL of the core 21), which support the ends of the carcass cords C, and bead-core moving means 40 that move a pair of bead cores 60. The tire producing apparatus 1 also includes, between the core 21 and the end holding means 30 on both sides, sequentially from the inside to the outside in the axial direction, bead-core fixing means 50 and carcass fold-back means 51 that fold the carcass cords C back. These pairs of end holding means 30, bead-core moving means 40, bead-core fixing means 50, and carcass fold-back means 51 are formed and disposed substantially symmetrical with respect to the equatorial plane CL of the core 21 and move substantially symmetrically in conjunction with each other.

The cord-arranging device 91 includes, similarly to the above (see FIG. 5), the pair of manipulators 92A and 92B disposed symmetrically on the left and right sides of the equatorial plane CL of the core 21, the finger chucks 93A and 93B arranged adjacent to the tips, the pressing members 94A and 94B, and the like, and is disposed such that the center line is substantially aligned with the equatorial plane CL of the core 21. Furthermore, the cord-arranging device 91 holds the ends of the carcass cords C, having been cut into a predetermined length to have a uniform length, with the finger chucks 93A and 93B, causes the manipulators 92A and 92B to synchronously move the finger chucks 93A and 93B and the pressing members 94A and 94B, respectively, in the radial and width directions of the core 21, and disposes and attaches the carcass cords C in a longitudinally stretched state onto the core 21 on a one-by-one basis.

Note that, in the cord-arranging device 91 of this tire producing apparatus 1, the ends of the carcass cords C arranged on the core 21 are not disposed on the side surfaces of the core 21, but are disposed and attached on the end holding means 30 and are pressed by the pressing members 94A and 94B. Thus, predetermined areas including both ends of the carcass cords C are disposed at positions distant from the outer surface of the core 21. That is, herein, first, the cord-arranging device 91 brings the central portion of the carcass cord C into contact with a portion near the equatorial plane CL of the tire crown molding portion 22 of the core 21, from that point, attaches and disposes it sequentially toward the outside in the width direction along the outer surface of the core 21, and attaches and disposes the ends of the carcass cord C to inclined surfaces 31 (described below) of the end holding means 30. Thus, the cord-arranging device 91 disposes the carcass cord C such that it is separated away from the core 21 at positions near the portions where the width at the tire-side molding portions 23 (side surfaces of the core 21) is largest in tangential directions of the outer surface of the core 21 at that positions and extends linearly toward the end holding means 30, in the above-mentioned tangential directions.

Herein, the carcass cord C, which is formed of at least one steel or organic fiber cord coated with unvulcanized rubber, is cut into a predetermined length in accordance with the size or type of the core 21 (the tire to be produced) by cutting means (not shown), is fed to the cord-arranging device 91, and is disposed on the core 21.

Furthermore, the tire components (not shown), such as an innerliner disposed at a lower layer (inner layer) of the carcass cords C (carcass ply), are already disposed on the outer surface of the core 21. The cord-arranging device 91 disposes the carcass cords C thereon. Thus, in the present invention, an expression such as "the carcass cords C are disposed or arranged on the support member (herein, the core 21) or on the outer surface thereof" means not only that the carcass cords C are disposed on the outer surface of the core 21, but also that the carcass cords C are disposed on the outside of a member disposed on the core 21 (support member) when the carcass cords C are disposed, i.e., the outer surface of another member that is already disposed on the outer surface of the core 21.

In addition, the finger chucks 93A and 93B of the cord-arranging device 91 include, for example, a pair of fingers (clamping member) that can move toward and away from each other. Driving means (not shown), such as a piston-cylinder mechanism, expands or closes the gap between the fingers, whereby the carcass cords C, clamped at predetermined positions at the ends, are held or released. On the other hand, the pressing members 94A and 94B are members for applying pressure, which are projected or retracted by driving means (not shown), such as a piston-cylinder mechanism, accommodated in the manipulators 92A and 92B. The pressing members 94A and 94B press and attach the ends of the carcass cords C to the members opposed thereto (herein, the end holding means 30).

The end holding means 30 are formed in a substantially ring shape having an outside diameter smaller than the inside diameter of the bead cores 60 (for example, the outside diameter is smaller than the inside diameter of the bead cores 60 by about 10 mm). The end holding means 30 are located axially outward of the core 21 at a predetermined distance therefrom, and substantially coaxially with the core 21, such that the outside diameter portions thereof are located radially inward of the bead molding portions 24 of the core 21. Furthermore, the end holding means 30 have the inclined surfaces (tapered surfaces) 31 at the side surfaces facing directions opposite the core 21, which are inclined toward the outer surface of the core 21 (herein, the above-mentioned tangential directions of the carcass cords C) in the radial direction of the core 21 (in the figure, the direction of the equatorial plane CL). The ends of the carcass cords C are first attached to these inclined surfaces 31.

Rubber sheets are attached to the inclined surfaces 31 of the end holding means 30 to increase the adhesion (bonding) to the carcass cords C, which are the cords coated with unvulcanized rubber, or, alternatively, magnets are disposed on the surfaces if the cords of the carcass cords C are steel cords, so that the ends of the carcass cords C to be attached are assuredly and removably fixed and held. As has been described, the end holding means 30 are members for holding the ends of the carcass cords C, are configured to be rotatable about the axis line together with the core 21 while being maintained coaxial therewith, and are rotary driven together with the core 21 by a rotary driving means (not shown) capable of adjusting the rotation angle thereof, including an electric motor such as a stepping motor and a mechanism for transmitting the rotational force of the motor.

The tire producing apparatus 1 according to this embodiment causes the rotary driving means to rotate the core 21 and the end holding means 30 by a predetermined angle in accordance with the disposing distance (attachment pitch) of the carcass cords C and causes the cord-arranging device 91 to arrange the carcass cords C sequentially in the radial direction substantially along the meridian of the core 21 and attach the ends thereof to the end holding means 30. Thus, by radially arranging the plurality of carcass cords C over the entirety of the core 21 in the circumferential direction so as to cover the entire outer surface thereof to the end holding means 30, the carcass cords C are disposed on the core 21 and the end holding means 30 in a single or multiple layers. Thus, the carcass ply is formed.

At this time, the end holding means 30 of the tire producing apparatus 1 hold the ends of all the carcass cords C, arranged on the core 21, at positions distant from each other axially outward of the core 21 and maintain the carcass cords C between themselves and the core 21 in a longitudinally stretched state. Thus, both ends, in the longitudinal direction, of the carcass cords C extending from the core 21 to the end holding means 30 in the tangential directions are linearly held at positions distant from the tire-side molding portions 23 and bead molding portions 24 of the core 21. Furthermore, as will be described below, the tire producing apparatus 1 maintains the carcass cords C in a stretched state until the bead-core moving means 40 move the bead cores 60 from primary positions and dispose the bead cores 60 and the carcass cords C on the bead molding portions 24 of the core 21.

The bead-core moving means 40 are bead set devices (bead setters) that move the bead cores 60 and dispose them at predetermined positions of the bead molding portions 24 of the core 21 in this manner, and include holding members 41 for holding the bead cores 60 and moving mechanisms 42 for moving the holding members 41 (the figure shows only the tips).

The holding members 41 are formed of, for example, a plurality of substantially ring-shaped segments disposed in the circumferential direction of the bead cores 60. By synchronously displacing the segments inward and outward in the radial direction of the bead cores 60 to bring the outer circumferences of the segments into contact with the inner circumferences of the bead cores 60, the holding members 41 removably support the bead cores 60 from the radially inside, for example. Herein, the holding members 41 are formed substantially in an L shape in cross section and come into contact with the inner circumferences of the bead cores 60 and the side surfaces thereof positioned opposite the core 21 such that the bead cores 60 are maintained in a substantially ring shape and partially project at portions on the core 21 side from the holding members 41 toward the core 21. Furthermore, bead fillers 61 tapered substantially radially outward are attached to the bead cores 60. The bead-core moving means 40 support the bead fillers 61 at the tips with support members (not shown) provided on the radially outside of the holding members 41 to also maintain the shape thereof.

On the other hand, the moving mechanisms 42 include, for example, a plurality of piston-cylinder mechanisms disposed in the circumferential direction of the holding members 41 and guide means that guide the movement of the holding members 41, and hold the holding members 41 and the bead cores 60 so as to be coaxial with the core 21. Furthermore, the moving mechanisms 42 operate the piston-cylinder mechanisms in conjunction with each other to move the holding members 41 substantially parallel to the axial direction of the core 21 (arrows R in the figure), thereby moving the holding members 41, which are holding the bead cores 60, substantially coaxially from the outside to inside in the axial direction of the core 21.

The bead-core moving means 40 hold the bead cores 60 (herein, the bead cores 60 having the bead fillers 61) with the holding members 41 and dispose them at primary positions before starting to move. After the above-described cord-arranging device 91 disposes all the carcass cords C on the core 21 and the end holding means 30, the moving mechanisms 42 drive the holding members 41 to move the bead cores 60 from the outside of the carcass cords C toward the core 21. During this movement, while moving the bead cores 60 toward the bead molding portions 24 of the core 21 so as to be coaxial, the bead-core moving means 40 bring the bead cores 60 into contact with predetermined positions in the longitudinal direction of the carcass cords C held at the ends with the end holding means 30. Thus, portions of the bead cores 60 on the core 21 side, over the entirety thereof in the circumferential direction, are brought into contact with the carcass cords C positioned in their movement paths, and the bead cores 60 are urged against the stretched carcass cords C and are pressed against the core 21, exerting a force in this direction on the carcass cords C.

Using the force associated with the movement of the bead cores 60, the bead-core moving means 40 fold the carcass cords C between the core 21 and the end holding means 30 toward the core 21, at the positions where the bead cores 60 are in contact with the carcass cords C. Then, the bead-core moving means 40 move the bead cores 60 so as to urge the bead cores 60 against the carcass cords C and displace the carcass cords C toward the outer surface (side surfaces) of the core 21 in a stretched state herein. Thus, the bead-core moving means 40 displace portions of the carcass cords C disposed at positions distant from the outer surface of the core 21 in a stretched state in the longitudinal direction and the traveling direction of the bead cores 60, and sequentially press and attach the carcass cords C to the outer surface from the outside to the inside in the radial direction of the core 21.

Thus, the carcass cords C in that area are disposed sequentially on the tire-side molding portions 23 and the bead molding portions 24 substantially along the meridian of the core 21, and, as indicated by a dashed line at the bead molding portion 24 on one side in the figure (the same at the bead molding portion 24 on the other side (not shown)), the bead cores 60 are disposed on predetermined positions of the bead molding portions 24 with the carcass cords C therebetween. Furthermore, the bead-core moving means 40, after pressing the bead cores 60 against the bead molding portions 24 and fix them to predetermined positions by adhesion of rubber or the like, allow the holding members 41 to release the bead cores 60 and move the holding members 41 axially outward of the core 21, while leaving the bead cores 60 and the like there.

The ends of the carcass cords C attached to the inclined surfaces 31 of the end holding means 30 are pulled by the force acting in the longitudinal direction etc., thereof due to the displacement of the carcass cords C associated with the movement of the bead cores 60, and move from the inclined surfaces 31 toward the outer circumferential surfaces (in the figure, the top surfaces) of the end holding means 30 so as to be gradually dragged toward the core 21.

When the bead cores 60 and the bead fillers 61 are disposed at predetermined positions on the side surfaces of the core 21 in this manner together with the carcass cords C, areas of the carcass cords C, including the ends thereof and having a predetermined length, are disposed from the radially inside of the bead cores 60 (in the figure, the side opposite to the bead filler 61) toward the axially outside of the core 21. The tire producing apparatus 1 includes the bead-core fixing means 50 disposed on the core 21 side at positions facing the ends of the carcass cords C, and the carcass fold-back means 51 that are disposed adjacent thereto, between the bead-core fixing means 50 and the end holding means 30.

The bead-core fixing means 50 are, for example, segments that are formed by segmenting a substantially ring-shaped member at a plurality of positions in the circumferential direction. The bead-core fixing means 50 are disposed adjacent to the bead molding portions 24 of the core 21, axially outward thereof, and are disposed so as to be capable of expansion/contraction radially inward and outward, at a position radially inside of the bead cores 60 disposed on the bead molding portions 24. Furthermore, the bead-core fixing means 50, being driven by driving means (not shown) such as a piston-cylinder mechanism, synchronously displace (arrows S in the figure) between a contracted-diameter position (separation position) (the position shown in the figure) on the radially inside, where they do not touch the inner circumferences of the bead cores 60 and an expanded-diameter position (contact position) (not shown) on the radially outside, where they are in contact with the inner circumferences of the bead cores 60 with the carcass cords C therebetween.

After the bead cores 60 are disposed on the bead molding portions 24 as described above, the bead-core fixing means 50 displace from the contracted-diameter position to the expanded-diameter position and come into contact with and support the bead cores 60 from radially inside, and fix the position thereof with respect to the core 21 to restrict the displacement in the circumferential direction, axial direction, and the like. Furthermore, the bead-core fixing means 50 also serve as sandwich means that sandwich the carcass cords C between themselves and the bead cores 60, push the carcass cords C upward from radially inside of the bead cores 60 disposed on the bead molding portions 24 and sandwich the carcass cords C between themselves and the bead cores 60, and press the carcass cords C toward the radially inside portions of the bead cores 60. Thus, the sandwiched carcass cords C are crimped (bonded) to the bead cores 60 and fixed thereto, and the carcass cords C adjacent thereto are sandwiched between themselves and the bead cores 60, engaged, and fixed.

The carcass fold-back means 51 are means for folding the ends back after the sandwich means (bead-core fixing means 50) sandwich the carcass cords C between themselves and the bead cores 60, and, similarly to the bead-core fixing means 50, are formed of a plurality of segments capable of expansion/contraction displacement (movement) etc., inward and outward in the radial direction of the bead cores 60 by, for example, driving means (not shown). Note that the carcass fold-back means 51 are disposed outward of the bead cores 60 disposed on the bead molding portions 24 in the axial direction of the core 21, are driven by the driving means from the contracted-diameter positions (noncontacting positions) (the positions shown in the figure) positioned radially inward of the inner circumferences of the bead cores 60, pass through the outer surfaces of the bead cores 60 in the width direction (axially outward of the core 21), and are moved toward the outside of the bead cores 60 in the substantially radial direction along the outer surfaces, in the width direction, of the bead filler 61 continuous therefrom. The carcass fold-back means 51 thus move over the outer surfaces of the bead fillers 61 by a predetermined distance, reciprocate between the expanded-diameter position (not shown) and the contracted-diameter position, and synchronously perform expansion/contraction displacement over the outer surfaces of the bead cores 60 and bead fillers 61 (arrows T in the figure).

After the bead-core fixing means 50 fix the bead cores 60 and the carcass cords C, the carcass fold-back means 51 move substantially radially outward from the contracted-diameter position and displace the carcass cords C, with which they are in contact, in the traveling direction. Then, the carcass fold-back means 51 move to the expanded-diameter position and fold the ends of the carcass cords C back around the bead cores 60 disposed on the bead molding portions 24 from the inside to the outside of the radial direction of the tire, and dispose them so as to cover the bead cores 60 and the like. At this time, the carcass fold-back means 51 fold the ends of the carcass cords C back at portions sandwiched between the bead cores 60 and the bead-core fixing means 50, and sequentially urge and press-bond (bond) them onto the outer surfaces of the bead cores 60 and bead fillers 61 from the inside to the outside in the radial direction. Thus, the ends of the carcass cords C are disposed along the bead filler 61, folded back, urged against the side surfaces thereof, bonded, and fixed thereto.

Herein, both the bead-core fixing means 50 and the carcass fold-back means 51 are disposed so as to be coaxial with the core 21 and are configured to be capable of expansion/contraction displacement while being maintained in this state. In addition, the outer circumferential surfaces on the radially outside (in the figure, top surfaces) of the bead-core fixing means 50 and the carcass fold-back means 51 in the contracted-diameter position (the position shown in the figure) are disposed at substantially the same positions as the outer circumferential surfaces of the end holding means 30 in the radial direction, and both of them are shaped and sized such that, when the bead cores 60 are moved as described above, the bead cores 60 and the holding members 41 can pass outward of them. Herein, to prevent contact during passing of the bead cores 60 and holding members 41, the outside diameters of them are formed so as to leave a slight gap between themselves and the bead cores 60 and the holding members 41.

Next, a process, an operation, and the like of molding a green tire and producing a pneumatic tire using the above-described tire producing apparatus 1 will be described.
The following processes etc., are controlled by a control device (not shown) including, for example, a microcomputer having a microprocessor (MPU) for performing various data processing, analysis, and calculation and a storage means having a ROM that stores various programs and a RAM that temporarily stores data for processing, and an interface for connection to external devices, and are executed by operating respective parts of the apparatus in conjunction with one another at a predetermined timing, in accordance with predetermined programs and preset conditions.

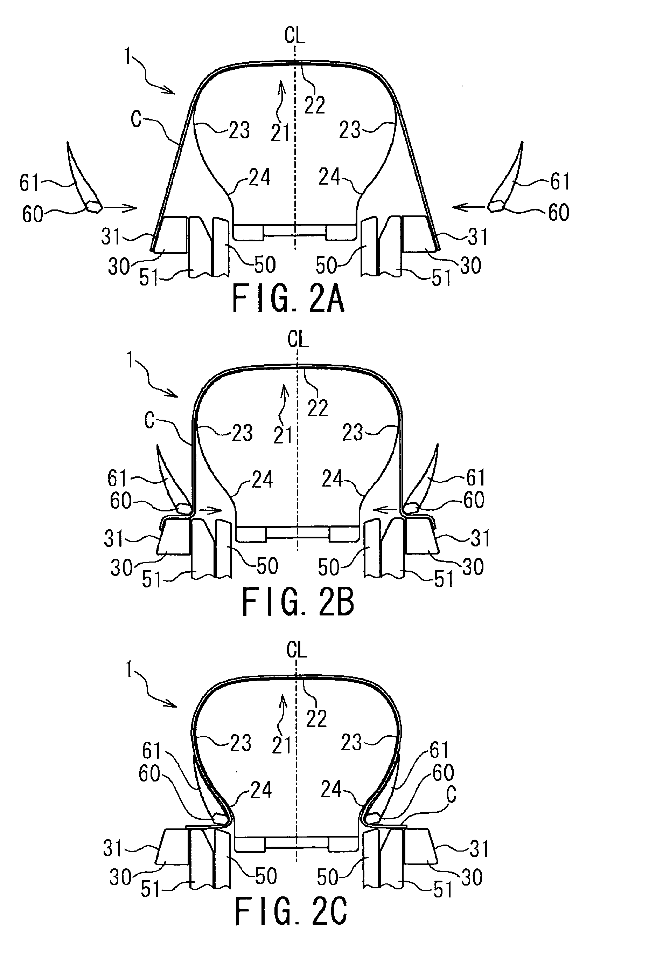

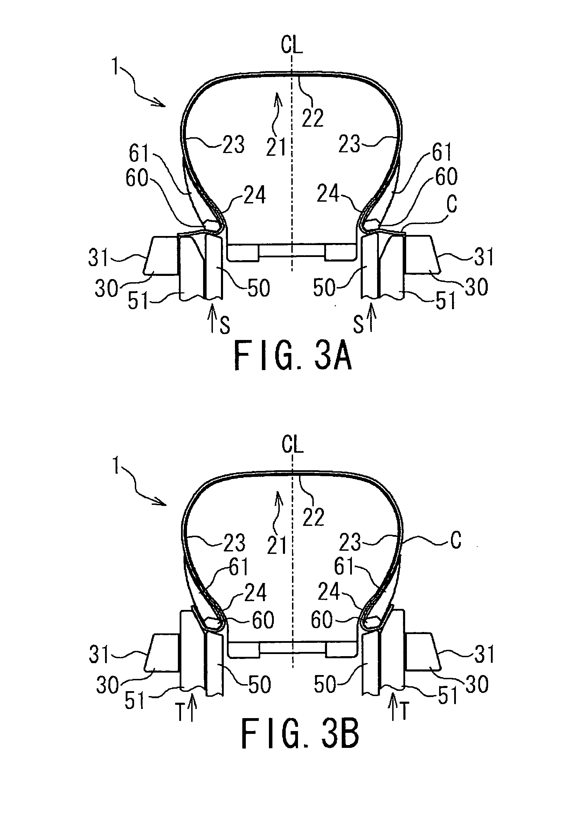

FIGS. 2 and 3 are schematic views showing part of an operation of forming a green tire with the tire producing apparatus 1 according to this embodiment, showing, corresponding to FIG. 1, one side of an enlarged cross section in the width direction of the core 21 (in the figure, the left-right direction). FIG. 2 shows an operation in which the carcass cords C, together with the bead cores 60 and the like are disposed on the outer surface of the core 21, and FIG. 3 shows an operation in which the ends of the carcass cords C are folded back around the bead cores 60.

Although illustration is omitted, a lower layer member that underlies the carcass cords C, for example, an innerliner, has already been attached to the outer surface of the core 21. The tire producing apparatus 1 according to this embodiment operates the respective parts of the apparatus, such as the cord-arranging device 91 (not shown in FIGS. 2 and 3), the bead-core fixing means 50, and the carcass fold-back means 51, in conjunction with one another substantially symmetrically on the left and right sides of the equatorial plane CL of the core 21, thereby making them perform placement and folding back of the carcass cords C, which will be described below.

In this tire producing apparatus 1, first, as described above, the core 21 and the end holding means 30 are rotated by a predetermined angle, and, at each time, the cord-arranging device 91 (not shown herein) disposes the carcass cord C substantially along the meridian of the core 21. By repeating the disposing, a plurality of carcass cords C are arranged substantially radially on the core 21 at a predetermined interval, and, as shown in FIG. 2A, the ends thereof are attached to the inclined surfaces 31 of the end holding means 30. Then, at least one layer of the carcass cords C are disposed so as to cover them from the outside (the figure shows the state after the disposing). Thus, the ends of the carcass cords C arranged on the core 21 are disposed at positions distant from each other by a predetermined distance axially outward of the core 21, and are held in a stretched state between the positions and the core 21. Then, portions in predetermined areas (length) between the core 21 and the ends of the carcass cords C are disposed so as to extend linearly from the outer surface of the core 21 in the tangential directions, away from the side surfaces of the core 21.

Next, as shown in FIG. 2B, the bead cores 60 (herein, the bead cores 60 with the bead fillers 61) are held by the bead-core moving means 40 (not shown herein) and are moved in the axial direction from axially outward of the core 21 toward the bead molding portions 24 of the core 21 with the carcass cords C therebetween.

At the same time, the bead cores 60 being moved are brought into contact with a predetermined position in the longitudinal direction of the carcass cords C, whose ends are held by the end holding means 30, and are urged in the traveling direction, exerting a force toward the core 21 on the carcass cords C not in contact with the outer surfaces (side surfaces) of the core 21 (herein, portions from the vicinity of the largest-width position of the core 21 to the ends). While this force urges the carcass cords C toward the side surfaces of the core 21, the resistance created by the end holding means 30 tending to maintain the ends of the carcass cords C in an attached state displaces the carcass cords C, in a stretched state, axially inward of the core 21 toward the core 21. Thus, while the carcass cords C, being displaced, is prevented from becoming slack, the carcass cords C are brought into contact with the side surfaces of the core 21 sequentially from radially outward to inward of the core 21 (in the figure, from above to below), disposed substantially along the meridian, urged thereagainst, and fixed by adhesion of rubber, etc. Thus, while the carcass cords C are disposed on the core 21 sequentially in the longitudinal direction thereof toward the ends, the bead cores 60 are moved axially inward of the core 21. Then, as shown in FIG. 2C, the bead cores 60 are disposed on and fixed to the bead molding portions 24 with the carcass cords C therebetween, such that the bead fillers 61 radially outward thereof extending between the bead molding portions 24 and the tire-side molding portions 23.

The carcass cords C in this state are maintained in a longitudinally stretched state by the frictional resistance between the ends and mainly the carcass fold-back means 51, and the ends sandwiching the bead cores 60 extend radially inward of the bead cores 60 (in the figure, below) and are disposed toward the carcass fold-back means 51 (axially outward of the core 21). Next, as shown in FIG. 3, the ends of the carcass cords C are folded back around the bead cores 60 disposed on the bead molding portions 24 of the core 21 from the inside to the outside of the tire, and are disposed along the side surfaces of the bead cores 60 and bead fillers 61.

At this time, in the tire producing apparatus 1, first, the bead-core fixing means 50 are displaced from the above-described contracted-diameter position to the expanded-diameter position (see FIG. 3A) (arrows S in FIG. 3A) to support and fix the bead cores 60 from radially inside, sandwich the carcass cords C in contact with the outer circumferential surfaces thereof between themselves and the bead cores 60, and press-bond and fix them to the inner circumferences of the bead cores 60. Next, the carcass fold-back means 51 are moved from the above-described contracted-diameter position to the expanded-diameter position (see FIG. 3B) (arrows T in FIG. 3B) to fold the ends of the carcass cords C back around the bead cores 60, dispose them so as to wrap the bead cores 60 and the bead fillers 61, sequentially press-bond them to the side surfaces thereof, and roll up and dispose them radially outward along the bead fillers 61. Although, herein, the tips of the side surfaces of the carcass fold-back means 51 on the core 21 side are inclined so as to conform to the shape of the side surfaces of the bead fillers 61 on which the carcass cords C are disposed, the carcass fold-back means 51 may be formed in another shape, such as a substantially rectangular shape in cross section, corresponding to the shape of the bead fillers 61 and the arrangement of the carcass cords C.

The tire producing apparatus 1, after arranging a plurality of carcass cords C on the core 21 and disposing the bead cores 60 and the like on the bead molding portions 24 of the core 21 with the carcass cords C therebetween, disposes or forms a belt and a tread on the outside thereof to form a green tire in a predetermined shape. Then, the green tire is subjected to vulcanization molding in a vulcanization mold, producing a product tire having a predetermined shape and performance.

As has been described, according to this embodiment, because a carcass ply and a green tire are formed by sequentially disposing the carcass cords C on the core 21, there is no need to prepare the carcass ply in advance by forming it in a predetermined shape. This increases the flexibility in design and production of tires and makes it possible to flexibly cope with multi-variety small-volume production and small-lot single-line production. Furthermore, because no joint portion is formed in the carcass ply and the green tire is formed into a shape close to its final molded shape (product tire shape) from the beginning, it is possible to increase the above-described uniformity of product tires and the balance in the circumferential direction of the tires and also to improve the quality and performance of the product tires. In addition, because it is possible to form tires having a new structure different from the conventional tires and to improve the quality, performance, etc., the limit design of tires and a reduction in weight of product tires become possible.

Furthermore, in this tire producing apparatus 1, because the plurality of carcass cords C can be displaced in a stretched state and disposed on the core 21 by the moving bead cores 60, the carcass cords C can be prevented from becoming slack during that period, and it is possible to prevent a deviation or variation of the disposing positions of the carcass cords C or it is possible to prevent the occurrence of the disturbance or non-uniformity of cord arrangement. Because this can increase the disposition precision of the carcass cords C, the carcass cords C can be accurately and assuredly disposed at predetermined positions on the outer surfaces (side surfaces) of the core 21. Thus, the above-described uniformity and balance of tires can be increased to further improve the quality and performance of the tires.

At the same time, in this tire producing apparatus 1, the bead cores 60 are first brought into contact with the carcass cords C at positions distant from the bead molding portions 24 and are displaced. During movement of the bead cores 60 and in a state in which the bead cores 60 are disposed on the bead molding portions 24, the tension of the carcass cords C is maintained by the resistance created by the end holding means 30 tending to maintain the ends of the carcass cords C in an attached state and by the frictional resistance between the ends and the carcass fold-back means 51 or the like. Therefore, not only the carcass cords C on the core 21, but also portions of the carcass cords C from the part in contact with the bead cores 60 to the ends can be prevented from being deviated or varied in disposing position, whereby the positions thereof can be assuredly maintained at predetermined disposing positions until the ends of the carcass cords C are folded back. Moreover, because the ends of the carcass cords C are held at positions distant from the core 21 and the bead cores 60, when the ends of the carcass cords C are folded back around the bead cores 60 with the above-described carcass fold-back means 51, the operation can be easily and assuredly performed without affecting other portions, compared to the conventional case.

As a result, the carcass cords C can be precisely and accurately folded back and rolled up around the bead cores 60, preventing deviation, variation, and non-uniformity in the disposing position from occurring at the ends of the carcass cords C due to the folding-back operation. Thus, the above-described uniformity and balance can be further increased to further improve the quality of tires. Furthermore, in this tire producing apparatus 1, because the bead-core fixing means 50 sandwich the carcass cords C between themselves and the bead cores 60 from radially inside and press-bond and fix them before the carcass fold-back means 51 are operated, the operation of folding back the carcass cords C can be more smoothly and accurately performed. At the same time, the movement of the carcass cords C to be folded back is limited, and, at this time, deviation in positions of the carcass cords C can be effectively prevented. Thus, the above-described uniformity, balance, and the quality of tires can be further increased.

According to this embodiment, in forming a green tire by disposing the bead cores 60 on the plurality of carcass cords C arranged on the core 21, the carcass cords C can be precisely and accurately disposed at predetermined positions and the carcass cords C can be folded back around the bead cores 60 with ease and high precision. Thus, the quality of tires can be improved.

Herein, in the tire producing apparatus 1 according to this embodiment, the disposing position of the inclined surfaces 31 of the end holding means 30 (see FIG. 1), to which the ends of the carcass cords C are first attached, in the axial direction of the core 21 (hereinafter, "axial direction position") and the angle of the inclined surfaces 31 with respect to the radial direction of the core 21 (hereinafter, "inclination angle") are such that the inclined surfaces 31 can securely hold the ends of the carcass cords C with a predetermined tension applied thereto, when the above-described bead cores 60 are moved toward the bead molding portions 24.

FIG. 4 is a schematic sectional view showing the end holding means 30, core 21, etc., extracted from FIG. 1, showing one side of the equatorial plane CL of the core 21 (in the figure, right side) in an enlarged state. FIG. 4A shows a state in which the moving bead cores 60 are first brought into contact with the carcass cords C, and FIG. 4B shows a state in which the bead cores 60 are disposed on the bead molding portion 24.

As shown in FIG. 4A, the inclined surface 31 of the end holding mean 30 is disposed at a position in an axial direction where, when the carcass cords C are stretched between itself and the core 21, the carcass cords C in that area form a tangent line with respect to the outer surface of the core 21. Herein, the carcass cords C in this state are disposed to form an angle of 15° to 20° (X in the figure) with respect to the radial direction of the core 21 (in the figure, the top-bottom direction), and the.inclined surface 31 of the end holding means 30 is also formed to have an inclination angle substantially the same as the angle X of the carcass cords C. Accordingly, the carcass cords C are disposed along the above-described tangent line so as to substantially linearly extend from the core 21 to the inclined surface 31 of the end holding means 30.

Furthermore, in this embodiment, by bringing the bead cores 60 into contact first with a predetermined position in the longitudinal direction of the thus-disposed carcass cords C, the carcass cords C are assuredly maintained in a stretched state until the bead cores 60 are disposed on the bead molding portions 24. That is, in this tire producing apparatus 1, the bead-core moving means 40 bring the bead cores 60 into contact with the carcass cords C and displace them such that L1 < L2, where L1 is the length (straight distance) in the longitudinal direction of the carcass cords C between a position M where the carcass cords C before coming into contact with the bead cores 60 (see FIG. 4A) are first separated from the core 21 toward the end holding means 30 (boundary position between the portion disposed on the core 21 and the portion disposed outward thereof) (in the present invention, "first separation position"), and a position N where the carcass cords C first come into contact with the bead cores 60, and L2 is the length (periphery length) (curve distance along the outer surface of the core 21) in the longitudinal direction of the carcass cords C between a position P where the carcass cords C come into contact with the bead cores 60 disposed on the bead molding portions 24 (see FIG. 4B) and the above-described first separation position M of the carcass cords C. At this time, L1 +Q1 ≒ L2 + Q2 and Q1 > Q2 stand, where Q1 is the length in the longitudinal direction between the position N on the carcass cords C (see FIG. 4A) and the cut end thereof (carcass end), and Q2 is the length in the longitudinal direction between the position P on the carcass cords C (see FIG. 4B) and the carcass end.

By making L1 < L2 true, the length in the longitudinal direction between the first separation position M of the carcass cords C and the position of the carcass cords C to which the bead cores 60 being displaced are brought into contact gradually increases with respect to the first length L1. Thus, a force in a pulling direction can be always exerted on the carcass cords C by the movement of the bead cores 60 until the bead cores 60 are disposed on the bead molding portions 24, whereby it is possible to assuredly maintain the carcass cords C in a longitudinally stretched state. As a result, the carcass cords C can be more accurately disposed at predetermined positions while assuredly maintaining sufficient disposition precision, whereby it is possible to effectively prevent carcass cords C from becoming wavy when disposed and the cord arrangement from being varied.

Although, in this embodiment, the bead fillers 61 are preliminarily attached to the bead cores 60 and they are together moved toward the core 21, only the bead cores 60 may be moved and disposed on the bead molding portions 24 with the carcass cords C therebetween, without providing the bead fillers 61. At this time, after the ends of the carcass cords C are folded back around the bead cores 60, they may be disposed along the outer surfaces of the bead cores 60 so as to wrap and cover them without being rolled up radially outward of the tire, so that the bead portions of the tire have a wrapped structure. In addition, a second bead core, a substantially ring-shaped binding member, etc., may be disposed on the outer circumferences of the wrapped carcass cords C, so that the bead portion have a sandwich structure in which the ends of the carcass cords C are sandwiched between the bead cores 60 and themselves.

The tire producing apparatus 1 can produce tires in general which can be formed by arranging a plurality of carcass cords C on the core 21, and it can produce, as described above, radial tires formed by arranging the carcass cords C, for example, passenger car radial tires (PSRs), light truck radial tires (LTRs), truck and bus radial tires (TBRs), tires for construction vehicles (ORRs), airplane tires (APRs), and the like. On the other hand, not only the radial tires, but also other tires may be formed by, for example, disposing the carcass cords C at a predetermined angle with respect to the meridian to form green tires, other than disposing the carcass cords C on the core 21 substantially along the meridian.

In addition, although this embodiment has been described taking the device that disposes the carcass cords C having a predetermined length on the core 21 sequentially on a one-by-one basis as an example, the present invention is not limited to such a device, but may be applied to another device for arranging a plurality of carcass cords C on the core 21 (support member). Accordingly, for example, by sequentially repeating the following process in the circumferential direction of the core 21, a plurality of carcass cords C are arranged over the entirety of the core 21, forming at least one layer of the carcass cords C: a single long carcass cord C is disposed from a position of the core 21 to one of the end holding means 30, is folded back at the inclined surface 31 toward the opposite direction, is disposed again on the core 21 at a position distant from the above position by a predetermined distance in the circumferential direction, is disposed to the other end holding means 30, and is again folded back at the inclined surface 31 in the opposite direction.

## Claims

1. A tire producing apparatus comprising:
a support member; and
a cord-arranging device for arranging carcass cords on the support member, the tire producing apparatus forming a green tire by arranging the plurality of carcass cords on the support member with the cord-arranging device and disposing bead cores on bead molding portions of the support member with the carcass cords therebetween,
wherein the tire producing apparatus includes end holding means that hold ends of the carcass cords arranged on the support member at positions distant from each other axially outward of the support member, and bead-core moving means that move the bead cores toward the bead molding portions, bring them into contact with and press them against the carcass cords held at the ends, displace the carcass cords toward the support member, and dispose the bead cores on the bead molding portions.

2. The tire producing apparatus according to claim 1,
wherein the bead-core moving means bring the bead cores into contact with and displace the carcass cords such that L1 < L2 stands, where L1 is a length in the longitudinal direction between a first separation position where the carcass cords before coming into contact with the bead cores are separated from the support member toward the end holding means and a position where the carcass cords first come into contact with the bead core, and L2 is a length in the longitudinal direction between the first separation position of the carcass cords and a position where the carcass cords come into contact with the bead core disposed on the bead molding portion.

3. The tire producing apparatus according to claim 1 or 2, further comprising fold-back means that fold the ends of the carcass cords back around the bead cores disposed on the bead molding portions.

4. The tire producing apparatus according to claim 3, further comprising sandwich means that sandwich the carcass cords between themselves and the bead cores from radially inward of the bead cores disposed on the bead molding portions and fix the carcass cords to the bead cores by pressing,
wherein, after the sandwich means sandwich the carcass cords between themselves and the bead cores, the fold-back means fold the ends of the carcass cords back.

5. A method for producing a tire in which a green tire is formed by arranging a plurality of carcass cords on a support member and disposing bead cores on bead molding portions of the support member with the carcass cords therebetween, the method comprising:
a step of holding ends of the carcass cords arranged on the support member at positions distant from each other axially outward of the support member;
a step of moving the bead cores toward the bead molding portions; and
a step of bringing the moving bead cores into contact with the carcass cords held at the ends to press the bead cores thereagainst, displacing the carcass cords toward the support member and disposing the bead cores on the bead molding portions.

6. The method for producing a tire according to claim 5,
wherein, in the step of disposing the bead cores on the bead molding portions, the bead cores are brought into contact with and displace the carcass cords such that L1 < L2 stands, where L1 is a length in the longitudinal direction between a first separation position where the carcass cords before coming into contact with the bead cores are separated from the support member and extend toward the ends being held and a position where the carcass cords first come into contact with the bead core, and L2 is a length in the longitudinal direction between the first separation position of the carcass cords and a position where the carcass cords come into contact with the bead core disposed on the bead molding portion.

7. The method for producing a tire according to claim 5 or 6, further comprising a step of folding the ends of the carcass cords back around the bead cores arranged on the bead molding portions.
